Europäisches Patentamt

European Patent Office

Office européen des brevets

(11) Numéro de publication: **0 100 926**
**B1**

(12) **FASCICULE DE BREVET EUROPEEN**

(19)

(45) Date de publication du fascicule du brevet:
**04.12.85**

(21) Numéro de dépôt: **83107058.6**

(22) Date de dépôt: **19.07.83**

(51) Int. Cl.⁴: **E 02 F 9/08,** E 02 F 3/32,
B 62 D 53/02

(54) Véhicule de manutention à bras orientable et châssis stabilisateur incorporé.

(30) Priorité: **23.07.82 FR 8213223**

(43) Date de publication de la demande:
**22.02.84 Bulletin 84/8**

(45) Mention de la délivrance du brevet:
**04.12.85 Bulletin 85/49**

(84) Etats contractants désignés:
**AT BE DE GB IT SE**

(56) Documents cités:
**EP - A - 0 046 234**
**FR - A - 1 383 409**
**FR - A - 1 540 015**
**US - A - 4 026 428**
**US - A - 4 082 197**

(73) Titulaire: **Gibert, Pierre Jean Marie, "Les Biches"**
**St-Cergues, F-74140 Douvaine (FR)**

(72) Inventeur: **Gibert, Pierre Jean Marie, "Les Biches"**
**St-Cergues, F-74140 Douvaine (FR)**

BUNDESDRUCKEREI BERLIN

## Description

L'invention concerne un véhicule de manutention à bras orientable et chassis stabilisateur incorporé, selon le préambule de la revendication 1.

Il existe essentiellement deux types connus de dispositifs de stabilisation applicables aux appareils de manutention à bras orientables:

les dispositifs de stabilisation assurant le soulèvement complet du véhicule équipé du bras de prehension, dispositifs se fixant généralement sous le véhicule et pouvant être équipés d'un mécanisme de pivotement ou d'orientation: on citera les documents FRA-1 383 409 et EP-A 0 046 234. Les dispositifs soulevant partiellement le chassis de l'engin, lorsque celui-ci est constitué par deux éléments porteurs respectivement des roues avant, et des roues arrières, articulés entre eux autour d'un axe vertical constituant articulation de direction du véhicule sur route l'un des éléments étant porteur du bras de préhension, on citera le document US-A-4 082 197.

Les dispositifs du premier type en se fixant sous le chassis du véhicule, afin de le soulever et de l'orienter, présentent un premier inconvenient en diminuant notablement la garde au sol du véhicule, qui évolue alors avec difficulté dans les terrains boueux ou faiblement porteurs. Les mêmes dispositifs présentent un second inconvenient, la position trés en arrière, du contrepoids d'équilibrage du bras, ou du centre de gravité, par rapport au pivot d'orientation, exige une grande surface de stabilisation au sol, d'où la necessité de prévoir quatre patins stabilisateurs indépendants et de grande portée.

Le troisième inconvenient de ces dispositifs, est qu'ils conduisent à des engins qui ne permettent pas de travailler à proximité de murs, ou dans des espaces limités, du fait du grand rayon giratoire de l'équipement rotatif. Les dispositifs du second type : comportant des béquilles stabilisatrices situées de part et d'autre des éléments du chassis, conduisent à une orientation du bras trés limitée lateralement : parce qu'autorisée simplement par le débattement permis par l'articulation charnière située entre les éléments avant et arrière du chassis : éléments qui, du fait de leur largeur propre se gènent mutuellement dans ce débattement, et en limitent ainsi l'importance.

La présente invention a pour but de remedier à ces inconvenients d'appareils de manutention connus.

L'invention telle qu'elle est caracterisée dans les revendications résoud le problème consistant à créer un appareil de manutention à bras orientable et chassis stabilisateur incorporé, pouvant orienter son bras de préhension d'un angle important de 90° de part et d'autre de l'axe longitudinal du chassis, dont le dispositif stabilisateur assure une grande stabilité laterale sans présenter l'inconvenient de diminuer la garde au sol du véhicule, de façon à permettre à ce dernier d'évoluer en terrain boueux. Appareil devant également posseder un rayon giratoire de l'équipement, trés réduit, de façon à permettre le travail de l'engin le long des murs ou dans des espaces limités.

L'ensemble de ces impératifs, permis par l'invention, sont réalisés de façon simple et compacte, et de ce fait trés économique, contrairement aux concepts classiques.

L'invention est exposée ci-après plus en détail à l'aide de dessins représentant un mode d'execution.

La figure 1 est une vue par côté avec arrachement, d'un engin établi conformément à l'invention.

La figure 2 est une vue en perspective à plus grande echelle du pivot d'articulation des deux éléments du chassis de l'engin suivant l'invention.

La figure 3 est une vue semblable à celle de la figure 1, mais illustrant l'engin à position de travail.

La figure 4 est une vue en perspective de l'élément du chassis portant le pivot, représenté à la position de travail de l'engin.

La figure 5 est une vue par dessus de l'engin de manutention illustré en figure 3, mais sur laquelle on n'a pas représenté le bras porteur et ses accessoires.

Les figures 6 et 7 sont des vues semblables à celle de figure 5, mais montrant les patins respectivement retractés et relevés.

L'engin de manutention suivant l'invention comprend essentiellement un châssis réalisé à la manière connue au moyen de deux éléments (1 et 2) articulés l'un par rapport à l'autre dans un plan horizontal au moyen d'un pivot vertical (3) faisant partie de l'élément avant (1) du châssis. Ce dernier est muni de deux essieux (4 et 5) aux extrémités desquels sont montées des roues (4a et 5a).

Les roues (4a), les roues (5a), ou l'ensemble des roues (4a et 5a) sont en rapport par tous moyens connus avec un moteur de propulsion (6). Il est noté que la voie des deux essieux est identique.

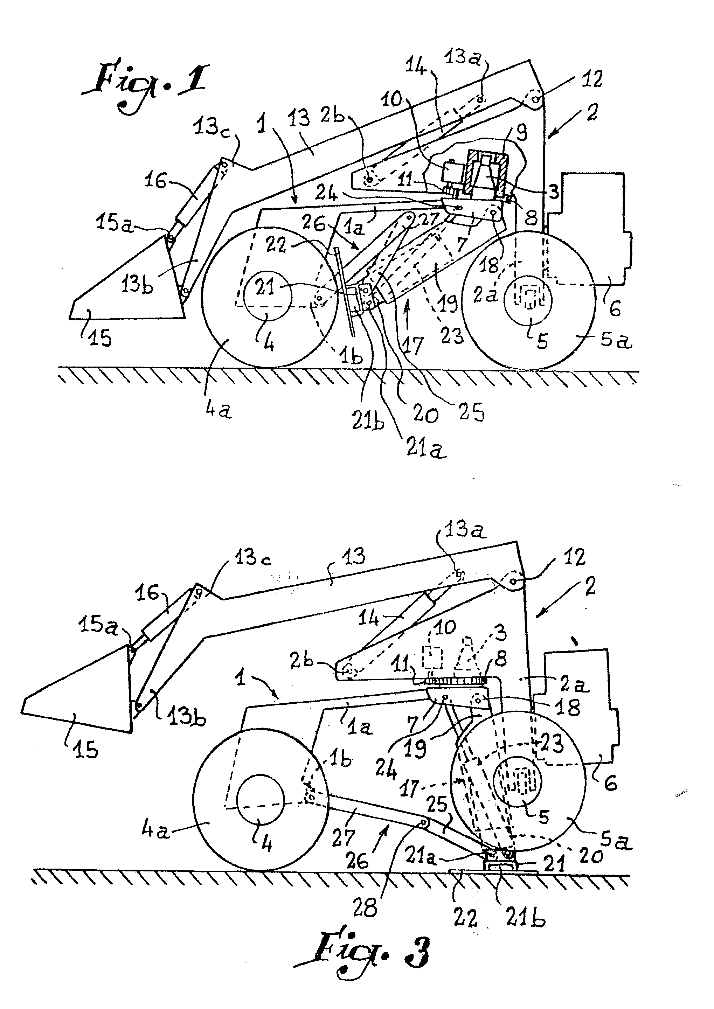

L'élément (1) est réalisé sous la forme d'un caisson étroit et se prolonge à sa partie supérieure par un bras plat (1a) en gros horizontal, dont l'extrémité libre porte une platine (7) (fig. 2) au centre de laquelle s'élève le pivot vertical (3). La platine 7 est réalisée sous la forme d'un U ouvert vers le bas, dont les ailes sont pourvues, de bossages (7a et 7b) dont le centre est percé pour former deux alésages parallèles transversaux (7c et 7d). L'alésage 7d se trouve situé au-delà du pivot 3 en direction de l'extrémité libre du bras 1 a.

Le dessus de la platine (7) est associé à une couronne dentée (8) centrée par rapport au pivot (3) et dont le rôle sera mieux expliqué plus loin.

Le second élément (2) du chassis est également réalisé sous la forme d'un caisson étroit présentant en profil la forme d'un triangle rectangle dont le sommet de l'angle droit se prolonge vers le bas par une jambe (2a) à l'extrémité de laquelle est monté l'essieu (5).

L'élément (2) est encore pourvu d'une boîte à roulements (9) propre à coopérer avec le pivot (3) pour assurer la rotation de cet élément (2) par rapport à celui (1), à la manière bien connue. L'élément (2) soutient un moteur hydraulique (IO) sur l'arbre de sortie duquel est calé un pignon (11) propre à coopérer avec les dents de la couronne (8), de telle sorte que lorsque ce moteur est mis en route, on provoque la rotation de l'élément (2) par rapport à celui (1). Le sommet de l'élément (2) situé au-dessus de la jambe (2a) comporte un axe horizontal (12) assurant le pivotement d'un bras porteur (13) par l'intermédiaire d'un vérin hydraulique (14) dont le cylindre est articulé autour d'un axe (2b) solidaire du caisson (2), tandis que l'extrémité de son piston coopère avec un axe de pivotement (13a) du bras (13). L'extrémité libre de celui-ci est associée à une benne ou autre outil de manutention ou de préhension (15). Celui-ci est articulé à l'extrémité (13b) du bras (13) autour duquel il peut basculer grâce à la présence d'un vérin hydraulique (16) disposé entre une chape (13c) du bras (13) et un axe (15a) de l'outil 15.

Conformément à l'invention, une béquille (17) est articulée autour d'un axe (18) engagé dans les deux alésages (7d) en vis-à-vis de la platine (7). Cette béquille est prévue télescopique, c'est à dire qu'elle comporte un organe creux (19) dont l'une des extrémités réalisée sous forme de fourche coopère avec l'axe (18), tandis que son extrémité opposée ouverte renferme un organe ou pied (20) susceptible de coulisser librement à l'interieur du premier (19).

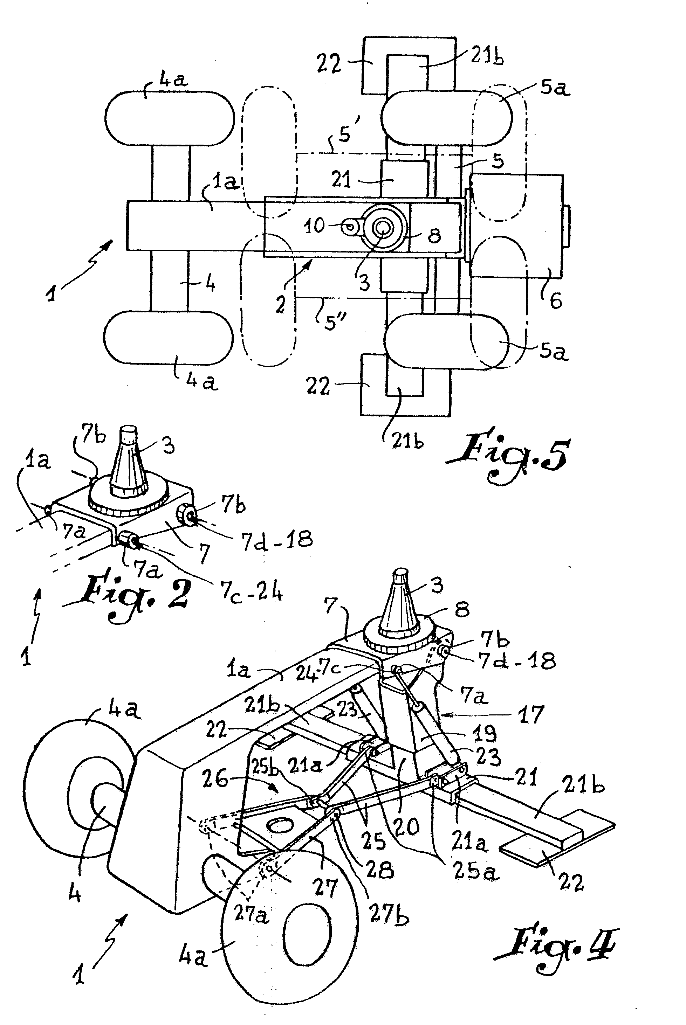

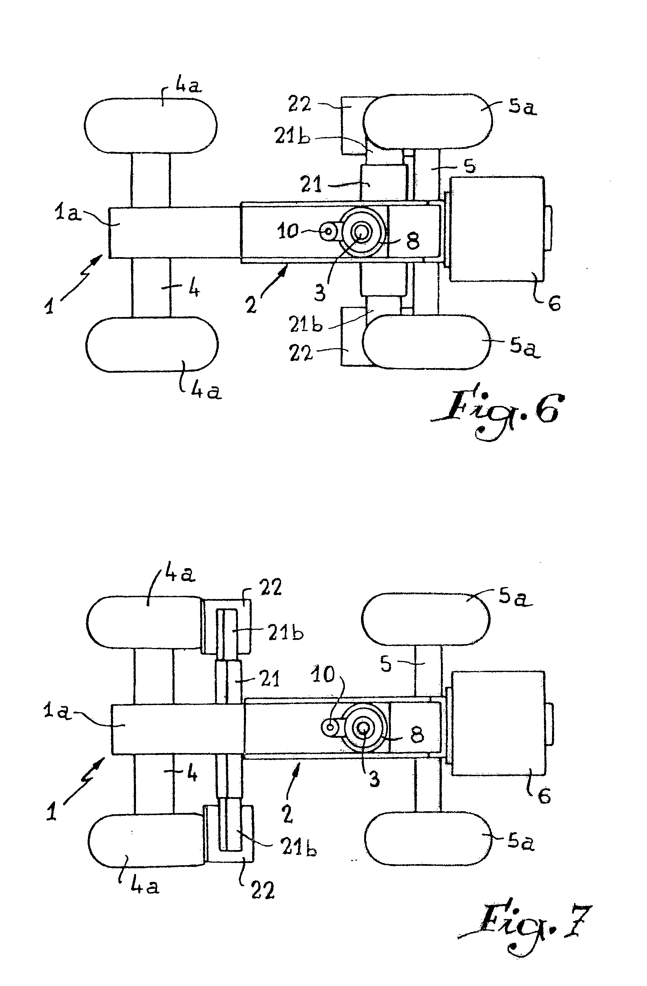

Comme plus particulièrement illustré en figure 4, le pied (20) est réalisé sous la forme d'un T renversé, la branche transversale ou semelle (21) portant à chacune de ses extrémités un patin transversal (22). La semelle transversale 21 du pied 20 est prévue télescopique c'est à dire qu'elle comporte deux parties extrêmes 21b coulissant par rapport à la semelle transversale 21 proprement dite et portant les patins 22. Ainsi les parties extrêmes 21b sont extraites de la semelle 2 pour augmenter la stabilité de l'appareil en position de travail (fig. 4 et 5) tandis que ces parties sont rétractées en position de déplacement (fig. 6 et 7). Suivant les figures 6 et 7 les patins (22) se trouvent dans le sillage ou la trace des roues (4a et 5a) ainsi leur écartement en position rétractée est égal à la voie de l'engin et leur largeur est égale ou inférieure à l'épaisseur des pneumatiques desdites roues. Ainsi, à la position relevé de la béquille, les patins (22) constituent garde-boue pour les roues (4a) (fig. 7).

De chaque côté de la base centrale du pied (20) se trouvent deux chapes (21a) dans chacune desquelles est articulé le cylindre d'un vérin hydraulique (23) dont la tige de piston oscille autour d'un axe (24) engagé dans les alésages (7c) en vis-à-vis de la platine (7). En fig. 1 et 3, on n'utilise qu'un seul vérin (23) dont l'extrémité de la tige est articulée autour de l'axe (24), tandis que son cylindre est monté oscillant par rapport à la base du pied (20).

Dans chaque chape (21a) est également articulée la première branche (25) d'un compas (26) dont l'autre branche (27) est articulée à des pattes (1b) de l'élément (1) du chassis.

Les branches (25) et (27) sont chacune réalisées sous la forme d'un élément triangulaire à sommet tromqué, chaque élément formant une poutre horizontale d'égale résistance. Chacun des éléments comprend au niveau de sa base des oreilles (25a, 27a) articulées respectivement aux chapes (21a) et aux oreilles (1b). Les sommets des éléments sont articulés entre eux par l'intermédiaire d'un axe (28) qui traverse des pattes extrêmes (25b, 27b) de chacune d'elles.

Comme illustré en fig. 5, 6 et 7, les éléments (1 et 2) du chassis sont prévus extrêmement étroits.

Le fonctionnement est le suivant:

En position route, comme illustré en fig.1, l'engin se déplace avec ses quatre roues en contact avec le sol. Le changement de direction peut alors être obtenu de manière conventionelle, à la façon d'une automobile, par les roues (4a) ou par les roues (5a) montées sur fusées. Une fois arrivé sur le lieu de travail, on alimente les vérins (23) de manière qu'ils se dilatent. On provoque en conséquence le basculement de la béquille (17) en direction de l'arrière autour de son axe (18), ce qui entraîne la sortie de l'organe du pied (20) jusqu'à ce que les patins (22) convenablement écartés de celui-ci viennent en contact avec le sol, puis la course des vérins se poursuivant, les roues arrière (5a) se soulèvent comme montré en fig. 3. Bien entendu on doit considérer que les dénominations arrière et avent ne sont évoquées que pour donner un exemple de construction, l'inverse pouvant tout aussi bien être réalisé.

Les deux branches (25, 27) du compas (26) viennent se placer tel qu'illustré en déterminant entre elles un angle obtus de manière qu'elles ne s'alignent pas. Les vérins (23) sont prévus de façon à être autobloquants à leurs deux positions extrêmes afin d'éviter tout dispositif de verrouillage dans ces positions. C'est ainsi qu'en position de travail, même s'il survient une chute brutale de pression d'huile, l'engin rest en position tant que le vérin n'a pas été sollicité de manière positive. Ces vérins étant bien connus dans la technique, il n'est pas necessaire de les décrire davantage.

Un dispositif de compas (26) dont les attaches avec l'élément (1) de l'engin et avec la béquille (17) sont très écartées permet d'encaisser la majeure partie du couple de rotation communiqué par le bras porteur (13) en cours de travail.

Lorsque l'on veut utiliser latéralement l'outil (15), il suffit d'alimenter le moteur hydraulique (10) pour provoquer la rotation de l'élément 2. Grâce à la disposition suivant l'invention, le bras de levage (13) peut tourner d'un angle de 90° de chaque côté de l'axe longitudinal de l'engin.

Comme on l'a illustré en fig. 5, lorsque l'orienta tion de l'élément (2) détermine un angle droit avec l'élément (1), l'essieu correspondant (5) venant en (5') ou en (5'') l'encombrement en largeur des roues (5a) demeure substantiellement compris dans la voie maximale des roues (4a).

## Revendications

1. Véhicule de manutention à bras orientable et chassis stabilisateur incorporé constitué par un chassis étroit composé de deux éléments (1, 2) supportant chacun un essieu (4, 5), ces ceux éléments étant articulés entre eux dans le plan horizontal au moyen d'un pivot vertical (3), du genre comportant un bras porteur (13) situé audessus du chassis (1, 2), et dont l'extrémité libre est pourvue d'un équipement de préhension (15) en porte-à-faux par rapport à l'essieu d'un premier élément (1), équipé à son extrémité arrière d'un axe d'articulation (12) par rapport à l'àutre élément (2) du chassis de façon a permettre son déplacement angulaire dans le plan vertical de cet élément, caractérisé en ce que le premier élément (1) du chassis qui porte le pivot vertical (3) comporte une charnière horizontale (7d, 18) située immédiatement en dessous dudid pivot, permettant l'articulation à un bras horizontal (1a) du premier élément (1) d'une béquille (17) centrale unique (19) qui s'abaisse d'une position repliée donc effacée, à une position d'utilisation dans laquelle elle se trouve sensiblement normale au sol et dans laquelle les roues (5a) de l'autre élément (2) quittent le sol.

2. Véhicule suivant la revendication 1, caractérisé en ce que la béquille (17) est prévue télescopique, sa partie coulissante (20) qui présente la forme d'un T renversé comportant une semelle (21) de stabilisation perpendiculaire à l'axe longitudinal de l'engin, dont chacune des extrémités est pourvue d'un patin (22) d'appui sur le sol.

3. Véhicule suivant la revendication 2, caractérisé en ce que les moyens (23) de provoquer le basculement de la béquille (17) sont autobloquants à leurs deux positions extrêmes.

4. Véhicule suivant la revendication 3, caractérisé en ce que le premier élement (1) et la semelle (21) de la béquille (17) sont réunis par un système de compas (26) qui encaisse la majeure partie du couple de rotation communiqué à l'engin par le bras porteur (13).

5. Véhicule suivant la revendication 4, caractérisé en ce que chaque branche (25, 27) du système de compas (26) est réalisée sous la forme d'un triangle dont la base est articulée respectivement à la béquille (17) et au premier élément (1) du chassis.

6. Véhicule suivant la revendication 4, caractérisé en ce que les patins (22) de la semelle de stabilisation (21) constituent en position repliée garde-boue pour les roues avant du fait qu'ils se trouvent dans le sillage de celles-ci.

7. Véhicule suivant la revendication 5, caractérisé en ce qu'en position pivotée à 90° par rapport à son axe longitudinal, (position permise par le chassis étroit) l'encombrement en largeur des roues arrière (5a) est substantiellement compris dans la voie maximale des roues avant (4).

## Patentansprüche

1. Förderfahrzeug mit Schwenkarm und eingebautem Stabilisator-Chassis, bestehend aus einem schmalen, aus zwei Teilen (1, 2) zusammengesetzten Chassis, wobei jedes dieser Teile eine Achse (4, 5) trägt und sie untereinander in der Horizontalebene mit einem vertikalen Schwenkzapfen (3) verbunden sind; oberhalb des Chassis (1, 2) befindet sich ein Tragarm (13), dessen freies Ende mit einer Greifvorrichtung (15) ausgestattet ist, die bezogen auf die Achse des ersten Teils (1) freitragend angeordnet ist und am hinteren Ende eine Gelenkachse (12) trägt, die mit dem anderen Teil (2) des Chassis durch ein Gelenk verbunden ist, so daß eine Winkelbewegung dieses Teils in der Vertikalebene möglich ist. Kennzeichnend ist, daß das Chassisteil mit dem vertikalen Schwenkzapfen (3) ein Horizontalscharnier (7d, 8) enthält, das sich unmittelbar unter diesem Schwenkzapfen befindet, so daß der Horizontalarm (1a) von Element (1) um eine zentrale Stütze (19) bewegt werden kann, die sich aus eingefalteter und damit nicht störender Position in eine Benutzungsposition absenkt, in der sie etwa senkrecht zum Boden steht und in welcher die Räder (5a) des anderen Teils (2) sich auf bekannte Weise vom Boden abheben.

2. Gerät gemäß Anspruch 1, gekennzeichnet dadurch, daß die Stütze (17) als Teleskop ausgeführt ist und ihr gleitendes Teil (20) in Form eines umgekehrten T eine Stabilisierungssohle (21) senkrecht zur Längsachse des Geräts hat, dessen beide Enden mit Bodenplatten (22) versehen sind.

3. Gerät gemäß Anspruch 2, gekennzeichnet dadurch, daß die Einrichtungen (23) zum Kippen der Stütze (17) sich in den beiden Endpositionen automatisch blockieren.

4. Gerät gemäß Anspruch 3, dadurch gekennzeichnet, daß das Vorderteil (1) und der Fuß (21) der Stütze (17) durch ein Gelenkstangensystem (26) verbunden sind, welches den größten Teil des Drehmoments aufnimmt, der dem Gerät durch den Tragarm (13) übertragen wird.

5. Gerät gemäß Anspruch 4, dadurch gekennzeichnet, daß jeder Schenkel (25, 27) des Gelenkstangensystems (26) in Form eines Dreiecks ausgeführt ist, dessen Grundlinie bezogen auf die Stütze (17) und Teil (1) des Chassis beweglich angeordnet ist.

6. Gerät gemäß Anspruch 4, dadurch gekennzeichnet, daß die Bodenplatten (22) des Stabilisierungsfußes (21) in eingefalteter Stellung als Schutzbleche für die Vorderräder dienen, da sie in deren Fluchtlinie liegen.

7. Gerät gemäß Anspruch 5, dadurch gekenn-

...net, daß die breite der Hinterräder (5a) in ihrer um 90 bezogen auf die Längsachse gedrehten Stellung im wesentlichen in der Maximalspur der Vorderräder (4) liegt.

**Claims**

1. Self-stabilizing machine for lifting and handling loads, constituted by a narrow chassis constituted of two elements (1, 2) each supporting an axle (4, 5), these two elements being articulated together in the horizontal plane by means of a vertical pivot (3), of the type comprising a bearing arm (13) located above the chassis (1, 2) and whose free end is provided with a handling equipment (15) in overhang with respect to the axle of a first element (1) equipped at the rear and with a pin (12) for articulation with respect to the other element (2) of the chassis so as to allow its angular displacement in the vertical plane of this element, characterized in that the element of the chassis which bears the vertical pivot (3) comprises a horizontal hinge (7d, 18) located immediately below said pivot, allowing the articulation on the horizontal arm (1a) of the element (1) of a single central prop (19) which passes from a folded, therefore retracted position to a position of use in which it is roughly normal to the ground and in which the wheels (4) of the other element (2) leave the ground in a known manner.

2. Machine according to Claim 1, characterized in that the prop (17) is provided to be telescopic, its sliding part (20) which presents the form of an upturned T comprising a stabilizing sole (21) perpendicular to the longitudinal axis of the machine, of which each of the ends is provided with a shoe (22) for abutment on the ground.

3. Machine according to Claim 3, characterized in that the means (23) for provoking tipping of the prop (17) are self-blocking in their two end positions.

4. Machine according to Claim 3, characterized in that the front element (1) and the sole (21) of the prop (17) are connected by a system of dividers (26) which absorbs the major part of the rotation torque communicated to the machine by the bearing arm (13).

5. Machine according to Claim 4, characterized in that each branch (25, 27) of the system of compasses (26) is made in the form of a triangle of which the base is articulated respectively on the prop (17) and on the element (1) of the chassis.

6. Machine according to Claim 1, characterized in that the shoes (22) of the stabilizing sole (21) constitute in folded position mud guard for the front wheels since they are located in the wake thereof.

7. Machine according to Claim 5, characterized in that in position pivoted through 90° with respect to its longitudinal axis (position allowed by the narrow chassis), the dimensions of the rear wheels (5a) in width are substantially included in the maximum gauge of the front wheels (4).

Fig. 1

Fig. 3

Fig. 5

Fig. 2

Fig. 4

*Fig.6*

*Fig.7*